(19) Europäisches Patentamt
European Patent Office
Office européen des brevets

(11) **EP 3 833 044 A1**

(12) **EUROPEAN PATENT APPLICATION**
published in accordance with Art. 153(4) EPC

(43) Date of publication:
**09.06.2021 Bulletin 2021/23**

(51) Int Cl.:
*H04R 3/00* (2006.01)　　　*G08G 1/005* (2006.01)
*H04R 1/02* (2006.01)　　　*H04R 1/40* (2006.01)

(21) Application number: **19843735.2**

(22) Date of filing: **22.07.2019**

(86) International application number:
**PCT/JP2019/028576**

(87) International publication number:
**WO 2020/026864 (06.02.2020 Gazette 2020/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **30.07.2018 JP 2018142777**

(71) Applicant: **Sony Corporation**
**108-0075 Tokyo (JP)**

(72) Inventors:
• **OSAKO, Keiichi**
**Tokyo 108-0075 (JP)**
• **MITSUFUJI, Yuhki**
**Tokyo 108-0075 (JP)**

(74) Representative: **2SPL Patentanwälte PartG mbB**
**Postfach 15 17 23**
**80050 München (DE)**

(54) **INFORMATION PROCESSING DEVICE, INFORMATION PROCESSING SYSTEM, INFORMATION PROCESSING METHOD, AND PROGRAM**

(57) An information processing apparatus, an information processing system, an information processing method, and a program according to the present disclosure each include a sound-source position determining section (131) and an output control section (133). The sound-source position determining section (131) determines a position of a virtual sound source that is generated by a speaker array (20) and produces a spherical wave. The output control section (133) controls an output from the speaker array (20) to cause the virtual sound source to be located at the position. The virtual sound source outputs voice information corresponding to visual information that is information shown on a display (30).

[ FIG. 5 ]

**Description**

Technical Field

The present disclosure relates to an information processing apparatus, an information processing system, an information processing method, and a program.

Background Art

In recent years, an information presentation system that provides a user with information shown on a display and voice information regarding the displayed information has become widely available.

For example, the following PTL 1 discloses a guidance apparatus that includes a display device showing guidance information, and an audio output device outputting guidance information as a voice. The guidance apparatus detects a user belonging to a specified guidance area and outputs a voice to the guidance area, thereby providing an appropriate guidance to the user.

Citation List

Patent Literature

PTL 1: Japanese Unexamined Patent Application Publication No. 2017-161448

Summary of the Invention

Problem to be Solved by the Invention

However, a voice outputted to a guidance area by an audio output device included in a guidance apparatus described in PTL 1 using a plane wave having a controlled directivity can be heard by a person present outside the guidance area.

Therefore, in view of the above circumstances, the present disclosure proposes an information processing apparatus, an information processing system, an information processing method, and a program each able to provide a user with voice information corresponding to information shown on a display while suppressing sound leakage to a surrounding space.

Means for Solving the Problem

According to the present disclosure, provided is an information processing apparatus that includes a sound-source position determining section and an output control section. The sound-source position determining section determines a position of a virtual sound source that is generated by a speaker array and produces a spherical wave. The output control section controls an output from the speaker array to cause the virtual sound source to be located at the position. The virtual sound source outputs voice information corresponding to visual information that is information shown on a display.

In addition, according to the present disclosure, provided is an information processing system that includes a sound-source position determining section and an output control section. The sound-source position determining section determines a position of a virtual sound source that is generated by a speaker array and produces a spherical wave. The output control section controls an output from the speaker array to cause the virtual sound source to be located at the position. The virtual sound source outputs voice information corresponding to visual information that is information shown on a display.

In addition, according to the present disclosure, provided is an information processing method that includes: determining a position of a virtual sound source that is generated by a speaker array and produces a spherical wave; and controlling an output from the speaker array to cause the virtual sound source to be located at the position. The virtual sound source outputs voice information corresponding to visual information that is information shown on a display. The determining and the controlling are performed by a processor.

In addition, according to the present disclosure, provided is a program directed to causing a computer to function as a sound-source position determining section and an output control section. The sound-source position determining section determines a position of a virtual sound source that is generated by a speaker array and produces a spherical wave. The output control section controls an output from the speaker array to cause the virtual sound source to be located at the position. The virtual sound source outputs voice information corresponding to visual information shown on a display.

According to the present disclosure, voice information is outputted from a virtual sound source generated by a speaker array and producing a spherical wave.

Effects of the Invention

As described above, according to the present disclosure, it is possible to provide a user with voice information corresponding to information shown on a display while suppressing sound leakage to a surrounding space.

It is to be noted that the effects described above are not necessarily limitative, and any of the effects described herein or any other effect that could be understood from the present description may be provided in addition to or in place of the above effects. Brief Description of Drawings

[FIG. 1] FIG. 1 is an explanatory diagram that describes a general information presentation system that provides a user with voice information through sound propagation of a plane wave.

[FIG. 2] FIG. 2 is an explanatory diagram that describes a plane wave outputted from a speaker array included in a general information presentation system.

[FIG. 3] FIG. 3 is an explanatory diagram that describes a general information presentation system that provides a user with voice information through sound propagation of a plane wave.

[FIG. 4] FIG. 4 is a block diagram illustrating an example configuration of an information processing system according to a first embodiment of the present disclosure.

[FIG. 5] FIG. 5 is a block diagram illustrating an example configuration of an information processing apparatus according to the first embodiment.

[FIG. 6] FIG. 6 is an explanatory diagram that describes an example of a method of calculating a hearing position of a user by a sound-source position determining section according to the first embodiment.

[FIG. 7] FIG. 7 is an explanatory diagram that describes a virtual sound source generated by an output control section according to the first embodiment.

[FIG. 8] FIG. 8 is an explanatory diagram that describes a virtual sound source generated by an output control section according to the first embodiment.

[FIG. 9] FIG. 9 is an explanatory diagram that describes a virtual sound source generated by an output control section according to the first embodiment.

[FIG. 10] FIG. 10 is an explanatory diagram that describes an example of sound propagation of a plane wave.

[FIG. 11] FIG. 11 is an explanatory diagram that describes information presented to a user by an information processing apparatus according to the first embodiment.

[FIG. 12] FIG. 12 is an explanatory diagram that describes information presented to a user by an information processing apparatus according to the first embodiment.

[FIG. 13] FIG. 13 is a flowchart that describes an example operation of the information processing apparatus according to the first embodiment.

[FIG. 14] FIG. 14 is an explanatory diagram that describes an example operation of an information processing apparatus according to the first embodiment.

[FIG. 15] FIG. 15 is a block diagram illustrating an example configuration of an information processing system according to a second embodiment of the present disclosure.

[FIG. 16] FIG. 16 is a block diagram illustrating an example configuration of an information processing apparatus according to the second embodiment.

[FIG. 17] FIG. 17 is a flowchart that describes an example operation of an information processing apparatus according to the second embodiment.

[FIG. 18] FIG. 18 is an explanatory diagram that describes an example operation of an information processing apparatus according to the second embodiment.

[FIG. 19] FIG. 19 is an explanatory diagram that describes a first modification example of an information processing system according to the present disclosure.

[FIG. 20] FIG. 20 is an explanatory diagram that describes a second modification example of an information processing system according to the present disclosure.

[FIG. 21] FIG. 21 is an explanatory diagram that describes a third modification example of an information processing apparatus according to the present disclosure.

[FIG. 22] FIG. 22 illustrates an example hardware configuration of an information processing apparatus according to an embodiment of the present disclosure.

Modes for Carrying Out the Invention

In the following, some preferred embodiments of the present disclosure are described in detail with reference to the attached drawings. It is to be noted that, in the present description and drawings, the same reference numerals are assigned to components having substantially the same functional configurations, thereby omitting duplicate descriptions.

It is to be noted that the description is given in the following order.

<1. Background>
<2. First Embodiment>
<3. Second Embodiment
<4. Modification Examples>
<5. Hardware Configuration>
<6. Conclusion>

<1. Background>

An information presentation system that provides a user with information shown on a display and voice information regarding the displayed information has become widely available. For example, an information presentation system is used in a public institution such as an airport, a station, or a bus stop, or a commercial facility such as a shopping mall or a mass retailer. At an airport, for example, the information presentation system causes a display to show arrival and departure time, boarding time, or the like of an airplane, and provides a user with voice information on this displayed arrival or departure time, boarding time, or the like. In addition, at a shopping mall, an indoor map of the shopping mall is shown on a display, and a user touches shop information shown on the map on the display, thereby making it possible to cause the display to further show detailed information on the shop. Further, the information presentation system causes the shop information to be outputted in the form of voice information in synchronized with a view of the detailed information on the shop.

In the information presentation system as described above, a size of a display used in the information presentation system, a volume of voice to be outputted, or the like varies depending on the number of intended users or a content of information to be provided to each user. For example, to present common information to a large number of users, an information presentation system that includes a large-screen display and a voice output device capable of outputting a voice to a wide range is used. In addition, for example, to present common information to a small number of users, an information presentation system that includes a small-screen display and a voice output device capable of outputting a voice to a small range with a low volume audible to the small number of users is used. In a voice output to a small number of users, a headset or the like is used, for example.

In contrast to the presentation of common information to a plurality of users, there is a case where it is expected to present individual information to each of a plurality of users. Such a case includes, for example, a case of presenting information in a different language, a case of presenting individual information specified by each user, or the like. Specifically, there is a case of presenting, at an airport, information on the arrival and departure of an airplane to each user in a different language, or the like. As such a method of presenting individual information to each of the plurality of users, for example, there is a method of view presentation using a display and voice output as follows.

A first information presentation method involves varying, at a regular interval, information to be presented to a plurality of users using a common display, and varying, at a regular interval, voice information to be outputted to an area in which the plurality of users are present. With the method through which a plurality of pieces of information is varied and outputted at a regular interval, it takes time for a user to obtain desired information. Therefore, this method is not sufficiently convenient and has room for improvement.

A second information presentation method involves simultaneously showing a plurality of pieces of visual information to be presented to each user in a plurality of divided display regions of the display or a plurality of displays, and varying the voice information to be outputted to the area in which the plurality of users is present at a regular interval. The visual information is information visually recognizable by a user such as image information or text information that is shown on the display. In this method, it is possible to show a plurality of pieces of visual information simultaneously. However, the voice information is varied at a regular interval, and it takes time to obtain the voice information in a case where the user desires voice information. Therefore, this method is not sufficiently convenient and has room for improvement.

A third information presentation method involves simultaneously showing a plurality of pieces of visual information to be presented to each user in a plurality of divided display regions of the display or a plurality of displays, and outputting different voice information to respective output areas different from each other. As the method of outputting different voice information to respective output areas different from each other, for example, there is a method of outputting voice information to the ears of each user using a headset, a voice output method in which an output direction of a voice is controlled using a directional speaker, or the like. This information presentation method allows each user to obtain individual information in a short time. In addition, for example, in a case where each user uses a headset, necessary voice information is outputted to each headset to suppress mixing of a voice to be heard by one user with a voice to be heard by another user, thus enabling reliable information transmission. However, some users feel it bothering to wear a headset. Furthermore, the headset, which is worn by the user in use, suffers from deterioration and needs to be replaced. This can increase a running cost of the information presentation system using the headset.

In addition, for example, in a case where a plurality of voice listening areas is set using a sound directivity of a directional speaker, it is possible to present voice information in Japanese to one listening area and present voice information in English to another listening area, thus enhancing efficiency in information presentation. However, even in the case of using a directional speaker, there is a case where one of the plurality of listening areas is intruded by a voice to be outputted to another area, hindering the user from obtaining voice information. In addition, such leakage of the voice information from the output area can make a person present outside the output area and does not want the voice information feel discomfort.

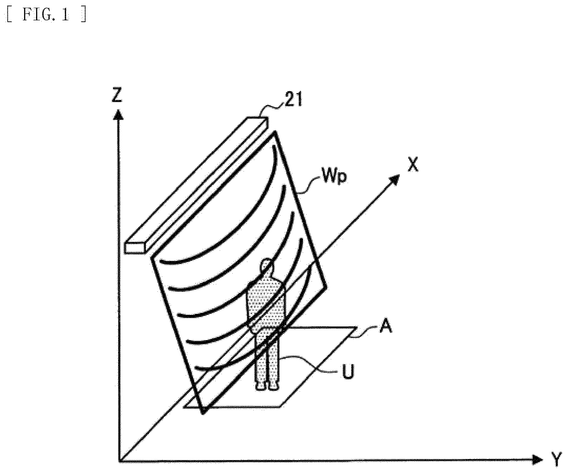

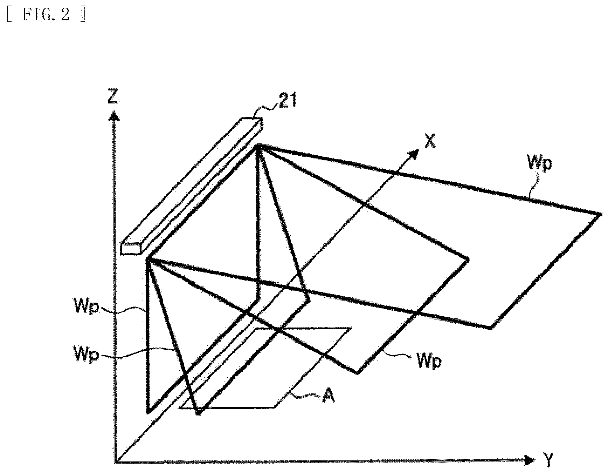

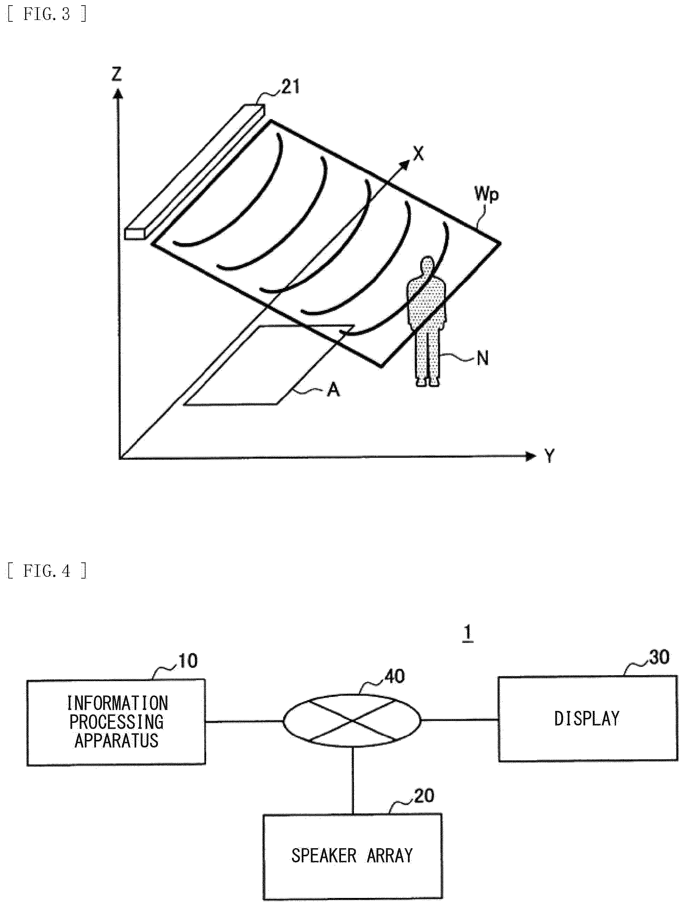

Here, an overview of the voice output by an information presentation system using a directional speaker is described with reference to FIGs. 1 to 3. FIG. 1 is an explanatory diagram that describes an information presentation system that provides a user with voice information through sound propagation of a plane wave. FIG. 2 is an explanatory diagram that describes a plane wave outputted from a speaker array included in a general information presentation system. FIG. 3 is an explanatory diagram that describes an information presentation system that provides a user with voice information through sound propagation of a plane wave.

As illustrated in FIG. 1, for example, as an example of the general information presentation system, there is an information presentation system that includes a speaker array 21. The speaker array 21 detects a user U entering a listening area A and outputs a voice having a directivity toward the listening area A. For example, this system synthesizes a waveform of sound outputted from the speaker array 21 by controlling the frequency or amplitude of the sound and generates a plane wave Wp, thereby causing the sound to be propagated across a specific range. For example, as illustrated in FIG. 1, the speaker array 21 that is installed above outputs a plane wave having a directivity controlled toward an area A in which the user U is located. This allows the user U to listen to the voice information outputted by the speaker array 21.

However, actually, as illustrated in FIG. 2, the speaker array 21 that produces the plane wave Wp outputs the plane wave Wp to a surrounding space, centering around the speaker array 21 as an axis. Therefore, as illustrated in FIG. 3, the plane wave Wp outputted from the speaker array 21 also reaches a head of a non-user N present outside the listening area A. Accordingly, the voice information outputted from the speaker array 21 leaks out to an outside of the listening area A, to be heard by a person who does not want to listen to the voice information. Such a leakage of the voice information is undesirable because people around do not need this information and perceive the voice information as noise.

In addition, for example, the general information presentation system often determines whether or not the user U is present in the listening area A through sensing with an infrared ray, an ultrasonic wave, or the like. Therefore, there is a possibility that voice information is outputted from the speaker array 21 simply when the non-user N who does not want to obtain voice information passes through the listening area A. Such an unnecessary output of voice information bothers a person who does not want the voice information. Therefore, it is desirable to output the voice information at a timing intended by the user U.

For a spherical wave, the level of sound pressure generally declines by 6 dB when a distance from a sound source doubles. On the other hand, for the plane wave, the level of sound pressure generally declines by 3 dB when the distance from the sound source doubles. The plane wave thus reaches farther than the spherical wave. Therefore, in an example case where a plurality of listening areas A to which different voice information are presented are provided along a traveling direction of the plane wave, the user U located in one of the listening areas A perceives other unwanted voice information in addition to a desired voice information. Accordingly, in the general information presentation system using the plane wave, there is a case where an installation layout is limited to prevent a plurality of pieces of voice information from being outputted to one listening area A.

The leakage of voice information to the outside of the listening area A and the limitation to the installation layout as described above are also likely to occur in a case of using a parametric speaker that produces sound having a directivity by ultrasonic wave, or the like.

Therefore, as a result of diligent study regarding the above, the inventors of the present technology have arrived at the present technology. In the following, embodiments of the present technology are described in detail.

<2. First Embodiment>

[2-1. Configuration]

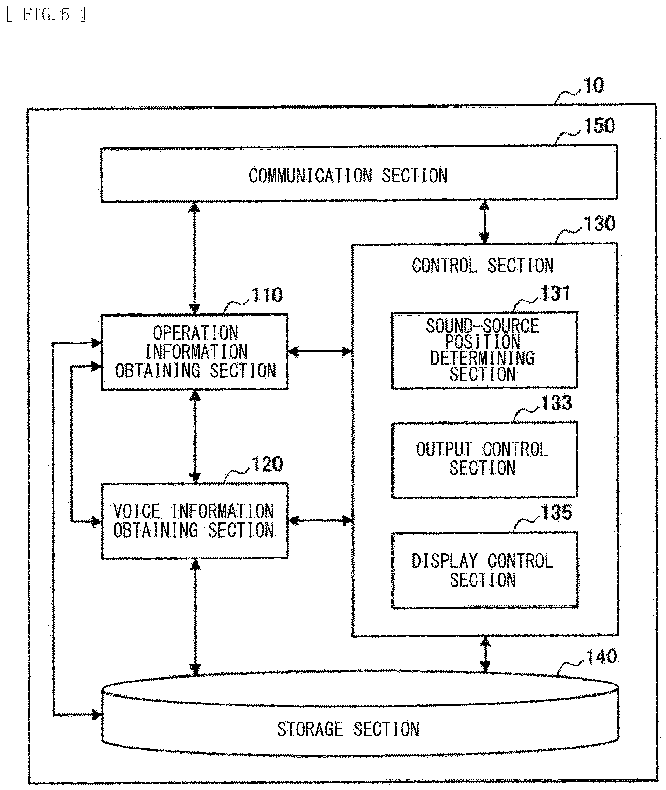

First, a configuration of each of an information processing system 1 and an information processing apparatus 10 according to a first embodiment is described with reference to FIGs. 4 and 5. FIG. 4 is a block diagram illustrating an example configuration of the information processing system 1 according to the present embodiment. FIG. 5 is a block diagram illustrating an example configuration of the information processing apparatus 10 according to the present embodiment.

First, the configuration of the information processing system 1 according to the present embodiment is described. The information processing system 1 includes the information processing apparatus 10, a speaker array 20, a display 30, and a network 40. Using the information processing apparatus 10, the information processing system 1 determines a position of a virtual sound source to be generated by the speaker array 20 and to produce a spherical wave. The information processing system 1 also controls an output from the speaker array 20 using the information processing apparatus 10 to cause the virtual sound source, which outputs voice information corresponding to visual information shown on the display 30, to be located at the determined position.

The information processing apparatus 10 determines the position of the virtual sound source to be generated by the speaker array 20 and to produce a spherical wave, and controls the output from the speaker array 20 to cause the virtual sound source to be located at the determined position. As illustrated in FIG. 5, the information processing apparatus 10 includes an operation information obtaining section 110, a voice information obtaining section 120, a control section 130, a storage section 140, and a communication section 150.

The operation information obtaining section 110 obtains operation information regarding an operation by a user. The operation information may include various information inputted using an input device included in the display 30, a position on the display 30, of the visual information selected by the user, information associated with the visual information, or the like. For example, the operation information obtaining section 110 may obtain operation information regarding a user operation via an input interface shown on the display 30 from the display 30. Examples of the operation information regarding a user operation include operation information on a selection of visual information, or a playback, end, or rewind of the voice information. In addition, for example, in a case where the display 30 on which the selection is made by the user includes a touch sensor, the operation information obtaining section 110 may obtain, from the display 30, a coordinate value of a touch by the user on the display 30. In addition, the operation information obtaining section 110 may obtain information associated with the visual information held by the storage section 140. For example, in a case where the information processing system 1 is used for trial listening of music, the operation information obtaining section 110 may obtain voice information associated with the jacket of a musical piece shown at a touch operation position or metadata including a release date, a performer, or the like.

The voice information obtaining section 120 obtains, from the storage section 140, voice information corresponding to the visual information at the touch operation position, which is obtained by the operation information obtaining section 110, in a view on the display 30.

The control section 130 controls the voice outputted from the speaker array 20 and the view shown on the display 30. The control section 130 includes a sound-source position determining section 131, an output control section 133, and a display control section 135.

The sound-source position determining section 131 determines the position of the virtual sound source to be generated by the speaker array 20. For example, the sound-source position determining section 131 may calculate a hearing position of the user and determine the position of the virtual sound source on the basis of the hearing position. For example, the hearing position mentioned here refers to the position of the user's head or ears. In addition, hereinafter, the position of the virtual sound source determined by the sound-source position determining section 131 is also referred to as a localization position.

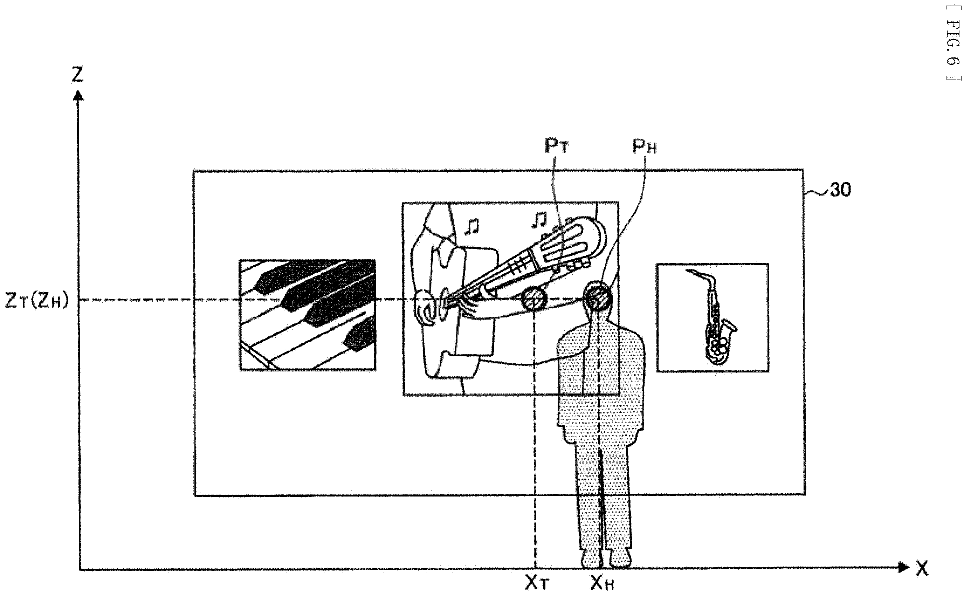

In addition, the sound-source position determining section 131 may calculate the hearing position on the basis of the touch operation position detected by the touch sensor included in the display 30 and detecting the touch operation by the user. Described with reference to FIG. 6 is an example method of determining, using the sound-source position determining section 131, the position at which the virtual sound source is to be generated. FIG. 6 is an explanatory diagram that describes an example method of calculating the hearing position of the user using the sound-source position determining section 131.

For example, in a case of using, as the display 30, a touch panel that includes a touch sensor intended for input detection, the sound-source position determining section 131 may determine the position at which the virtual sound source is to be generated in the following manner. The sound-source position determining section 131 obtains a coordinate of the position touched by the user. For example, as illustrated in FIG. 6, the sound-source position determining section 131 obtains a touch operation position $P_T(X_T, Z_T)$ touched by the user. For example, the sound-source position determining section 131 may calculate, using a predetermined conversion formula, a hearing position $P_H(X_H, Z_H)$ from the touch operation position $P_T(X_T, Z_T)$ to determine the position of the sound source. Specifically, the hearing position $P_H$ may be calculated in accordance with the following Expression (1):

$$(X_H, Z_H) = (X_T, Z_T + F_Z) \dots \text{Expression (1)}$$

where Fz denotes a correction factor regarding a z-axis direction.

Expression (1) is a conversion formula prepared to cause the virtual sound source to be located at the position of the user's head, on an assumption that the point touched by the user is located in front of the user in an x-axis direction and is located at a position lower than the height of the user's head in the z-axis direction. Accordingly, in Expression (1), the localization position is determined using, for the x-axis direction, a coordinate of the touch operation position and using, for the z-axis direction, a value corrected of the touch operation position using the correction factor Fz. For example, the correction factor Fz at this time may be set within a range of 0.1 m to 0.3 m.

As described above, the sound-source position determining section 131 calculates the hearing position on the basis of the touch operation position of the user, thereby making it possible to appropriately present the user with the voice information wanted by the user.

It is to be noted that the conversion formula is not limited to Expression (1), and another conversion formula may be used. For example, a conversion formula prepared by machine learning or the like may be used. Use of the conversion formula prepared by machine learning or the like makes it possible for the sound-source position determining section 131 to calculate the hearing position more accurately.

The method of calculating the hearing position on the basis of the touch operation position detected by the touch sensor and determining the localization position detected by the sound-source position determining section 131 has been described above. However, it is sufficient that the sound-source position determining section 131 obtains position information regarding the visual information selected by the user and determines the localization position on the basis of the position information. It is possible to apply an existing technique to such a method of determining the localization position by the sound-source position determining section 131. In addition, for example, a method of detecting the position of the user's head using a camera as described in a second embodiment may be applied to the method of determining the localization position by the sound-source position determining section 131.

The output control section 133 controls an output from the speaker array 20 to cause the virtual sound source that produces a spherical wave to be located at the position determined by the sound-source position determining section 131. The output control section 133 may perform wavefront-synthesis filter processing to control the output from the speaker array to cause the virtual sound source to be located at the localization position. Specifically, the output control section 133 may calculate a wavefront-synthesis filter with which the virtual sound source is located at the localization position and perform the wavefront-synthesis filter processing on voice data using the wavefront-synthesis filter. It is possible to apply an existing virtual-sound source generation technique to such a method of controlling the output from the speaker array 20. For example, it is possible to apply a technique described in an existing published literature: S. Spors et al.: "Physical and Perceptual Properties of Focused Sources in Wave Field Synthesis", Audio Engineering Society Convention Paper, 127th Convention 2009 October 9-12.

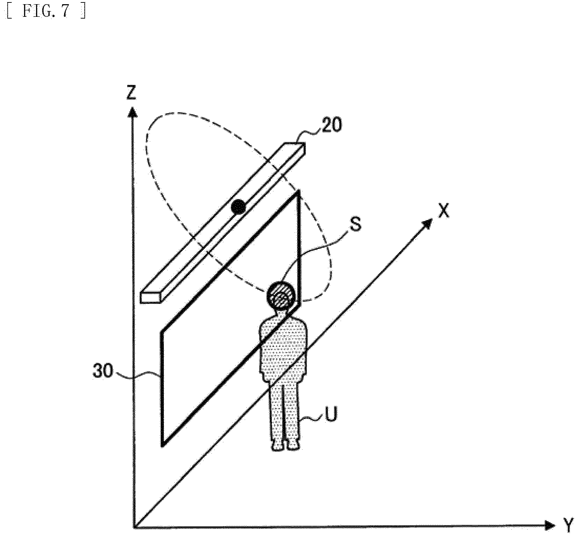

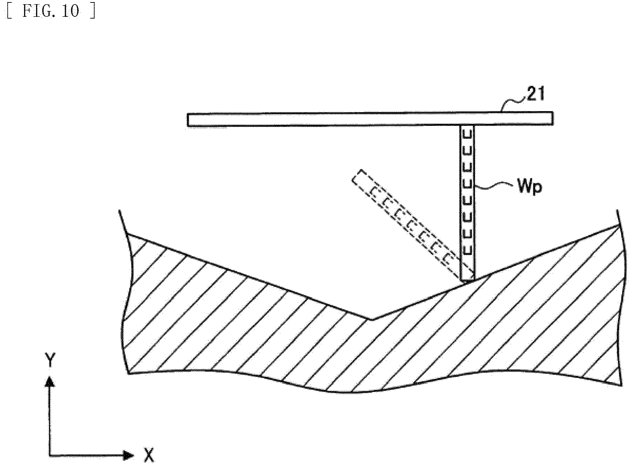

Here, the virtual sound source generated by the output control section 133 is described with reference to FIGs. 7 to 9 and FIG. 10. FIGs. 7 to 9 are each an explanatory diagram that describes the virtual sound source generated by the speaker array 20 under the control from the output control section 133. FIG. 10 is an explanatory diagram that describes an example of sound propagation of a plane wave.

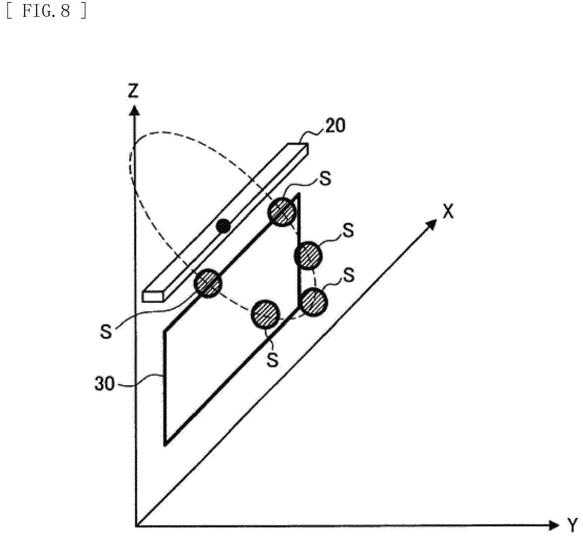

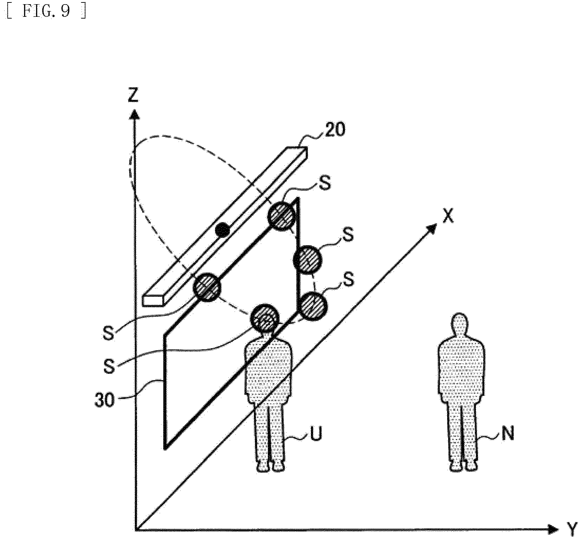

For example, the output control section 133 to which the method described in the published literature described above is applied controls the output from the speaker array 20 and generates a virtual sound source S that produces a spherical wave. In a case where the speaker array 20 is a line array speaker in which speakers are arranged side by side in one direction, the speaker array 20 controls the position of the virtual sound source S along a longitudinal direction of the speaker array 20. For example, as illustrated in FIG. 7, in a case where the output control section 133 controls the speaker array 20 to cause the virtual sound source S to be located at the position of the user U's head, the speaker array 20 generates, as illustrated in FIG. 8, a plurality of virtual sound sources S each at a position equidistant from the speaker array 20 in a cross-section perpendicular to the longitudinal direction of the speaker array 20 (in FIG. 8, y-z plane). The voice information is propagated from each virtual sound source S to a surrounding space. However, the sound produced by the virtual sound source S is a spherical wave, which causes a larger attenuation of the sound than the plane wave. Thus, as illustrated in FIG. 9, the output control section 133 controls the sound pressure of a sound outputted from the virtual sound source S toward the position of the user U's head, thereby making it possible to suppress recognition of the voice information outputted from the virtual sound source S by a person N present at a position distant from the virtual sound source S.

In addition, in a case where the sound is a plane wave and where there is an obstacle such as a wall in a propagation direction of the plane wave as illustrated in FIG. 10, the plane wave is reflected by the wall, which can cause the voice to leak out to an outside of the set listening area. In contrast, the sound produced by the virtual sound source S undergoes a larger attenuation than the plane wave. Accordingly, it is possible to cause the spherical wave produced by the virtual sound source S to be sufficiently attenuated when the spherical wave reaches the obstacle. As a result, it is possible to suppress recognition of the voice information outputted by the virtual sound source S by a person outside the listening area.

In addition, the output control section 133 may control the output from the speaker array 20 to cause the virtual sound source to be located at the position determined on the basis of the hearing position calculated by the sound-source position determining section 131. Even in a case where the sound volume of the voice information produced by the virtual sound source is low, locating the virtual sound source at the hearing position allows the user to listen to the voice information, suppressing recognition of the voice information by a person present around the user.

In addition, the output control section 133 may control the output from the speaker array 20 to generate a plurality of virtual sound sources. Generating a plurality of virtual sound sources makes it possible to present different pieces of voice information to a plurality of users.

The display control section 135 controls the view on the display 30, and controls visual information to be presented to the user using the display 30. For example, in a case where the information processing system 1 is used for trial listening of music, the display control section 135 may show an image related to a musical piece available for trial listening, including, for example, a jacket, a music video, or the like of the musical piece.

The storage section 140 appropriately holds various programs, databases, or the like that are used in the above-described various types of processing performed by the control section 130. For example, the storage section 140 may appropriately hold various parameters to be stored, an interim progress of processing, or the like, such as a conversion formula necessary for the determination of the position of the virtual sound source by the sound-source position determining section 131, the coordinate of the touch operation position, or a coordinate of the localization position calculated by converting the coordinate of the touch operation position. In addition, the storage section 140 may hold the voice information outputted by the output control section 133, or the visual information shown on the display 30 by the display control section 135. The control section 130 may freely perform read/write processing on this storage section 140.

The communication section 150 receives and transmits various information from/to the speaker array 20 and the display 30. For example, the communication section 150 receives visual information from the display 30 and outputs the visual information to the control section 130. In a case where the display 30 is a touch panel, the communication section 150 may receive the coordinate of the touch operation position of the user from the display 30. In addition, the communication section 150 transmits, to the speaker array 20, an output instruction from the output control section 133, and transmits, to the display 30, a view instruction from the display control section 135.

In accordance with an instruction from the output control section 133, the speaker array 20 generates the virtual sound source that produces a spherical wave, and causes the virtual sound source to output voice information corresponding to the visual information shown on the display 30. For example, a line array speaker in which a plurality of speakers is arranged is used as the speaker array 20. The number, a specification, etc. of the speakers included in the speaker array 20 may be varied in accordance with the position at which the virtual sound source is located, the number of the virtual sound sources, the volume of the voice outputted from the virtual sound source, or the like.

For the speaker array 20, it is sufficient to be able to locate the virtual sound source at the position determined by the sound-source position determining section 131. It is possible to arrange the speaker array 20 into various shapes, such as a shape in which a plurality of speakers is linearly arranged or a shape in which a plurality of speakers is arranged in a curved manner. In addition, a stack of a plurality of line array speakers may be used as the speaker array 20. For example, a plurality of line array speakers vertically stacked with respect to the longitudinal direction in which the plurality of speakers is arranged may be used as the speaker array 20.

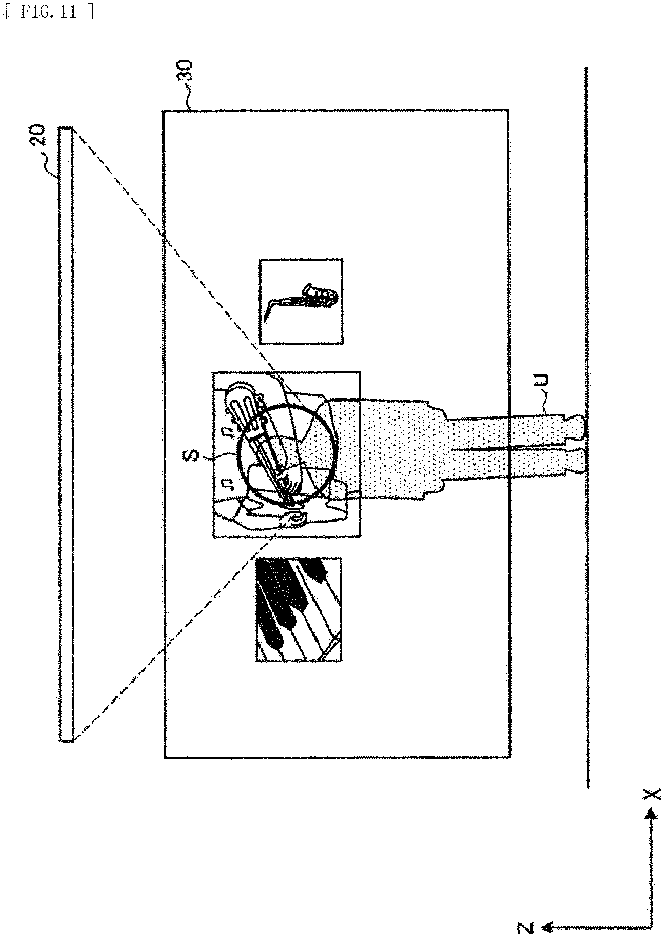

It is sufficient to install the speaker array 20 such that the virtual sound source is located within a range in which the user is able to recognize visual information and perform a touch operation. For example, as illustrated in FIG. 11, the speaker array 20 may be installed above the display 30.

The display 30 shows visual information. The display 30 may show a plurality of pieces of visual information. For example, the display 30 may show visual information held by the storage section 140. In addition, the display 30 may include a touch sensor. As a result of the touch sensor detecting a user touch, the visual information whose voice information is to be outputted is selected from the plurality of pieces of visual information shown on the display 30.

The display 30 may show an input interface. As a result of the user operation via the input interface, the display 30 may transmit, to the operation information obtaining section 110, operation information regarding the playback, end, or rewind of the voice information. It is to be noted that the display 30 may include an input device, such as a mouse, a keyboard, or the like.

The network 40 is a wired or wireless transmission path for information transmitted from a device coupled to the network 40. For example, the network 40 may include a public network such as the Internet, a telephone network, or a satellite communication network, or various types of LANs (local area networks), WANs (wide area networks), or the like.

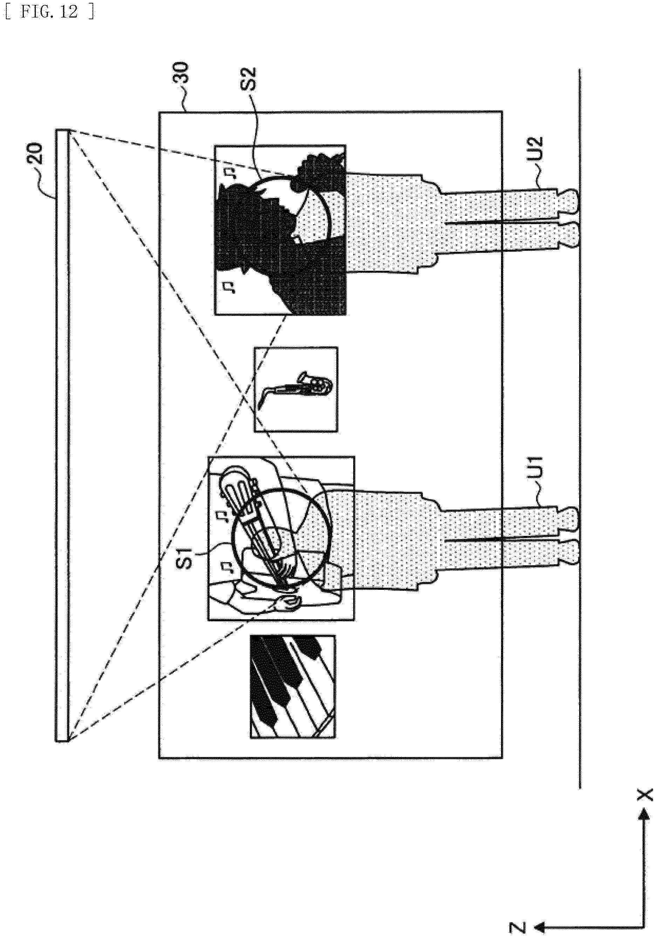

Here, an example of use of the information processing system 1 is described with reference to FIGs. 11 and 12. FIGs. 11 and 12 are each an explanatory diagram that describes information presented to a user by the information processing apparatus 10 according to the present embodiment. As illustrated in FIG. 11, the display 30 is installed in front of the user U, and the speaker array 20 is installed above the display 30. In FIG. 11, as a plurality of pieces of visual information, jacket images of a musical piece are shown on the display 30. A magnified view of the visual information selected by the user U is shown on the display 30. The virtual sound source S is located at the position of the user U's head, and the virtual sound source S outputs voice information corresponding to the visual information, for example, a musical piece corresponding to the jacket image. Consequently, the user U is able to listen to the musical piece. It is to be noted that the metadata related to the visual information selected by the user U may be shown on the display 30.

In addition, the information processing system 1 may be simultaneously used by a plurality of users. For example, as illustrated in FIG. 12, in a case where a user U1 and a user U2 each select a different jacket image, the speaker array 20 may localize two virtual sound sources at different positions and cause the virtual sound sources to output different voice information. The spherical wave produced by the virtual sound source S generated by the speaker array 20 are significantly attenuated in accordance with a distance from the virtual sound source S. Therefore, for example, the information processing system 1 prevents the user U2 from recognizing the voice information produced by a virtual sound source S 1 that is located at the position of the user U1's head. As a result, this makes it possible for the information processing system 1 to simultaneously present different voice information to users without causing interference between the users.

So far, a configuration of the information processing system 1 according to the present embodiment has been described.

[2-2. Operation]

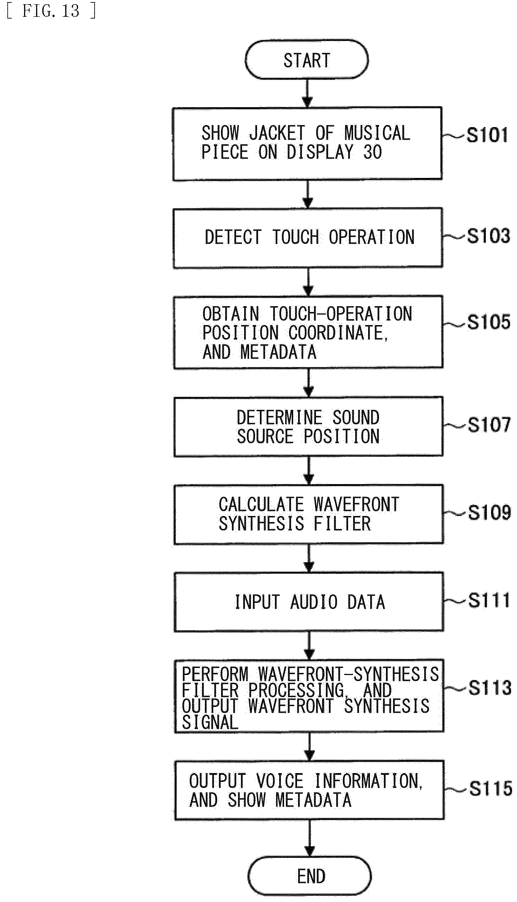

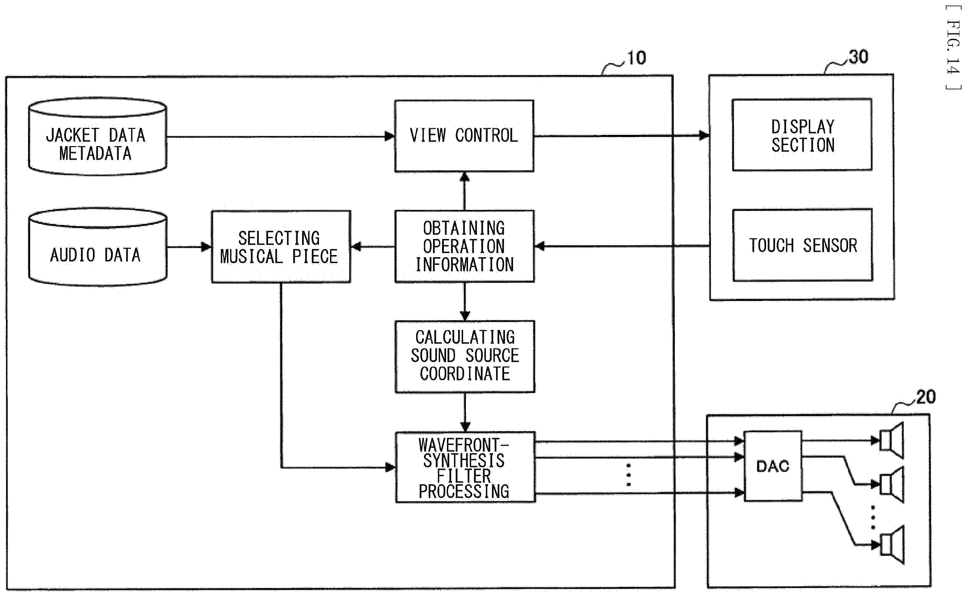

Subsequently, an operation of the information processing apparatus 10 is described with reference to FIGs. 13 and 14. FIG. 13 is a flowchart that describes an example of the operation of the information processing apparatus 10 according to the present embodiment. FIG. 14 is an explanatory diagram that describes an example operation of the information processing apparatus 10 according to the present embodiment. It is to be noted that in the following description, a case of applying the information processing apparatus 10 according to the present embodiment to trial listening of music is described as an example, but it goes without saying that the information processing apparatus 10 according to the present embodiment is not limited to trial listening of music.

First, the display control section 135 shows visual information on the display 30 (Step S101). For example, the display control section 135 shows, on the display 30, a jacket image of a musical piece held by the storage section 140. Next, the touch sensor included in the display 30 detects a touch operation by a user (Step S103). When the touch operation by the user is detected by the touch sensor, the operation information obtaining section 110 obtains a coordinate value of the touch operation position from the display 30, and obtains, from the storage section 140, the metadata associated with the jacket image shown at the touch operation position (Step S105). The sound-source position determining section 131 obtains the coordinate value of the touch operation position from the operation information obtaining section 110, and determines the localization position on the basis of the coordinate value (Step S107). Next, the output control section 133 calculates a wavefront-synthesis filter with which the virtual sound source is located at the localization position of the virtual sound source, which is determined by the sound-source position determining section 131 (Step S109).

Next, the voice information obtaining section 120 obtains the coordinate value of the touch operation position from the operation information obtaining section 110. The voice information obtaining section 120 obtains, from the storage section 140, audio data corresponding to the jacket shown at the touch operation position, and inputs the audio data to the output control section 133 (Step S111). Subsequently, the output control section 133 performs wavefront-synthesis filter processing on the inputted audio data, using the calculated wavefront-synthesis filter. Further, the output control section 133 transmits, to the speaker array 20, a wavefront-synthesis signal that is a digital signal on which the wavefront-synthesis filter processing has been performed (Step S113). The speaker array 20 converts the wavefront-synthesis signal into an analog signal using a DAC (digital analog converter), converts the converted analog signal into a voice and outputs the voice, thereby localizing the virtual sound source at the localization position and causing the virtual sound source to output a musical piece corresponding to the jacket from (Step S115). At this time, the display control section 135 may obtain information related to the touch position from the operation information obtaining section 110 and show the metadata on the display 30. The voice output is finished as a result of the playback being completed or stopped by a user operation.

<3. Second Embodiment

[3-1. Configuration]

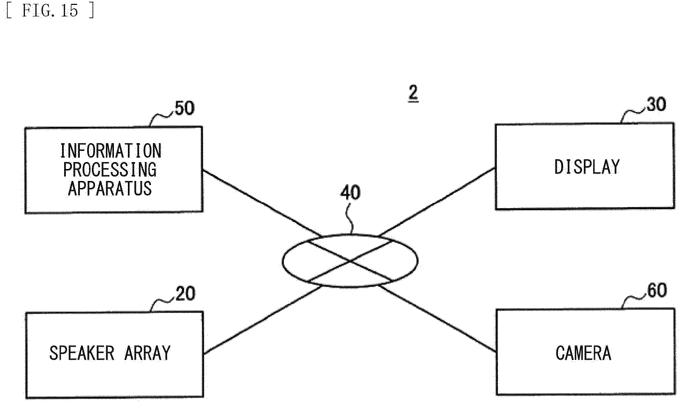

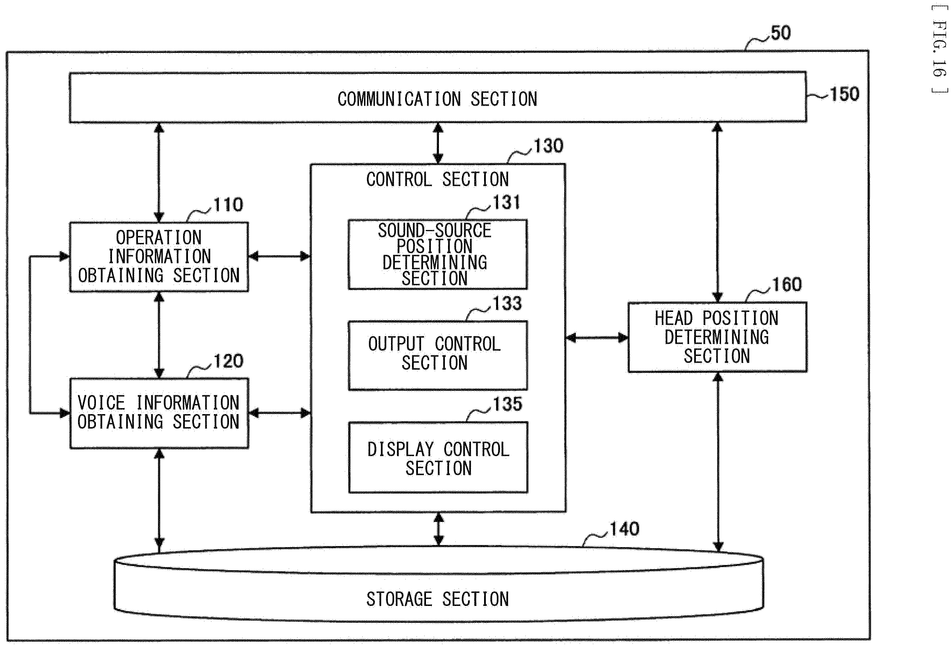

Subsequently, an information processing system 2 and an information processing apparatus 50 according to a second embodiment of the present disclosure are described with reference to FIGs. 15 and 16. FIG. 15 is a block diagram illustrating an example configuration of the information processing system 2 according to the second embodiment of the present disclosure. FIG. 16 is a block diagram illustrating an example configuration of the information processing apparatus 50 according to the present embodiment.

As illustrated in FIG. 15, the information processing system 2 according to the present embodiment includes the information processing apparatus 50, the speaker array 20, the display 30, the network 40, and a camera 60. The speaker array 20, the display 30, and the network 40 that are included in the information processing system 2 are similar to those in the first embodiment. However, the information processing system 2 according to the present embodiment is different from the information processing system in the first embodiment in that the information processing system 2 includes the camera 60. The speaker array 20, the display 30, and the network 40 are similar to those described in the first embodiment, and therefore a detailed description thereof is omitted here.

As illustrated in FIG. 16, the information processing apparatus 50 according to the present embodiment includes the control section 130, the storage section 140, the communication section 150, and a head position detecting section 160. The control section 130, the storage section 140, and the communication section 150 that are included in the information processing apparatus 50 each have a function similar to the function described in the first embodiment. However, the information processing apparatus 50 according to the present embodiment is different from the information processing apparatus in the first embodiment in that the information processing apparatus 50 includes the head position detecting section 160. The operation information obtaining section 110, the voice information obtaining section 120, and the output control section 133 that are included in the control section 130, the display control section 135 included in the control section 130, the storage section 140, and the communication section 150 each have a function similar to the function described in the first embodiment, and therefore a detailed description thereof is omitted here.

The head position detecting section 160 detects the head of the user from an image captured by the camera 60 and detects the position of the user's head. For example, the head position detecting section 160 is able to detect the position of the user's head using a publicly-known face detection technique. For example, the head position detecting section 160 may occasionally obtain an image captured by the camera 60 and occasionally detect the position of the user's head, or may obtain, from the camera 60, an image that is captured when the user performs an input operation on the display, and detect the position of the user's head from the image.

In addition to the function described in the first embodiment, the sound-source position determining section 131 may determine the localization position on the basis of the head position detected by the head position detecting section 160. The sound-source position determining section 131 may determine the localization position on the basis of the position of the user's head that is detected by the head position detecting section 160 when a predetermined input operation by the user is detected. For example, the sound-source position determining section 131 may determine, as the localization position, the position of the user's head that is detected by the head position detecting section 160 when the touch operation by the user is detected by the touch sensor included in the display 30.

The camera 60 captures an image of at least a part of a space in which the information processing system 2 is installed, and generates the image. For example, the camera 60 is installed so as to obtain an image of a range in which the user is likely to be present. The image captured by the camera 60 is transmitted to the head position detecting section 160.

So far, a configuration of the information processing system 2 according to the present embodiment has been described.

[3-2. Operation]

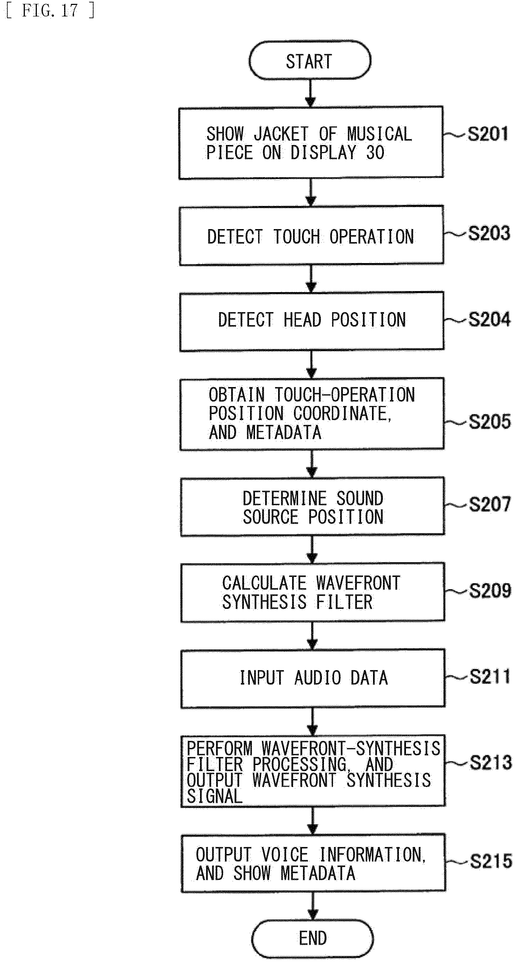

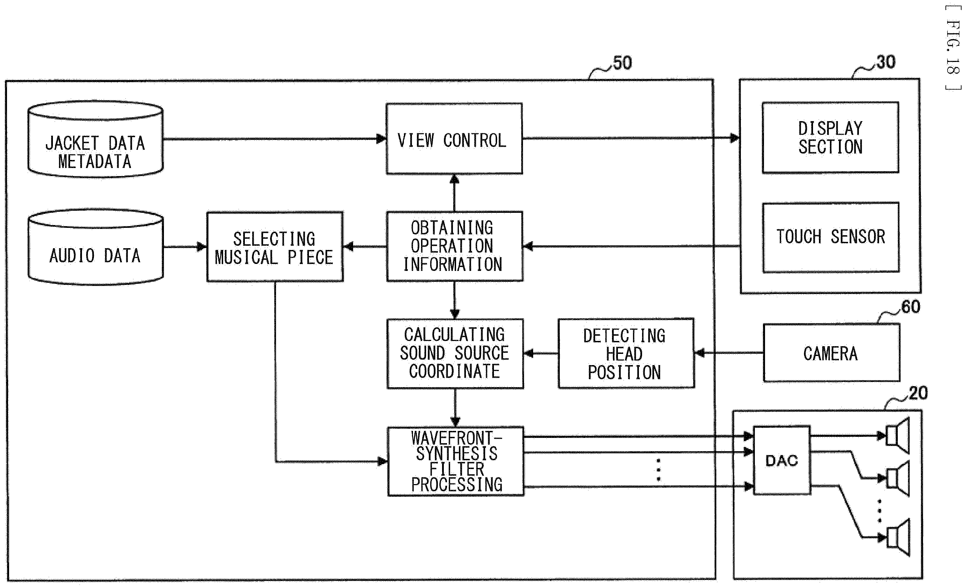

Subsequently, an operation of the information processing apparatus 50 is described with reference to FIGs. 17 and 18. FIG. 17 is a flowchart that describes an example operation of the information processing apparatus 50 according to the present embodiment. FIG. 18 is an explanatory diagram that describes an example operation of the information processing apparatus 50 according to the present embodiment. Step S201, Step S203, Step S205, and Steps S209 to S215 as illustrated in FIG. 17 are respectively similar respectively to Step S101, Step S103, Step S105, and Steps S109 to S115 as described in the first embodiment, and therefore a detailed description thereof is omitted here. The operation of the information processing apparatus 50 according to the present embodiment is different from the operation of the information processing apparatus 10 according to the first embodiment in that the operation of the information processing apparatus 50 includes an operation in the head-position detection Step S204. It is to be noted that in the following description, as in the first embodiment, a case of applying the information processing apparatus 50 according to the present embodiment for the purpose of trial listening of music is described as an example, but it goes without saying that the information processing apparatus 50 according to the present embodiment is not limited to trial listing of music.

In Step S204, the head position detecting section 160 detects the position of the user's head. For example, the head position detecting section 160 may occasionally obtain the image captured by the camera 60 and occasionally detect the position of the user's head, or may obtain, from the camera 60, an image that is captured when the user performs an input operation on the display, and detect the position of the user's head from the image.

In Step S207, the sound-source position determining section 131 determines the localization position on the basis of the head position detected by the head position detecting section 160. Further, after Steps S209 to S215 are executed, the voice output is finished as a result of the playback of the musical piece being completed or stopped by a user operation. The operation described above makes it possible for the information processing apparatus 50 to localize the virtual sound source at the position of the user's head more accurately. As a result, it becomes possible to present voice information to the user without uselessly increasing the volume of the voice information outputted from the virtual sound source, thus making it possible to suppress recognition of the voice information by people around.

<4. Modification Examples>

[4-1. First Modification Example]

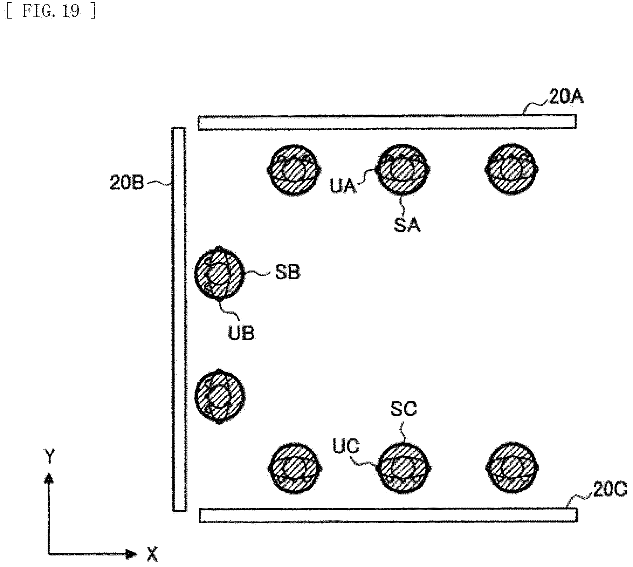

In each of the information processing system 1 according to the first embodiment and the information processing system 2 according to the second embodiment, a case of including one speaker array 20 and one display 30 has been described. However, the information processing system may include a plurality of speaker arrays 20 and a plurality of displays 30. An information processing system that includes a plurality of speaker arrays 20 and a plurality of displays 30 is described with reference to FIG. 19. FIG. 19 is an explanatory diagram that describes a first modification example of the information processing system.

The information processing system according to the present modification example may include, for example, three speaker arrays 20 and three displays 30. As illustrated in FIG. 19, a speaker array 20A and a speaker array 20C out of the three speaker arrays 20 may be installed opposed to each other, and a display 30A and a display 30C out of the three displays 30 may be installed opposed to each other. The spherical wave produced by the virtual sound source S generated by the speaker array 20 are significantly attenuated in accordance with the distance from the virtual sound source S. Therefore, the information processing system according to the present modification example prevents a user UC present behind a user UA from recognizing the voice information produced by a virtual sound source WA generated by the speaker array 20A. Accordingly, in the information processing system 1 according to the present modification example, it is possible to install a plurality of speaker arrays 20 at positions opposed to each other.

[4-2. Second Modification Example]

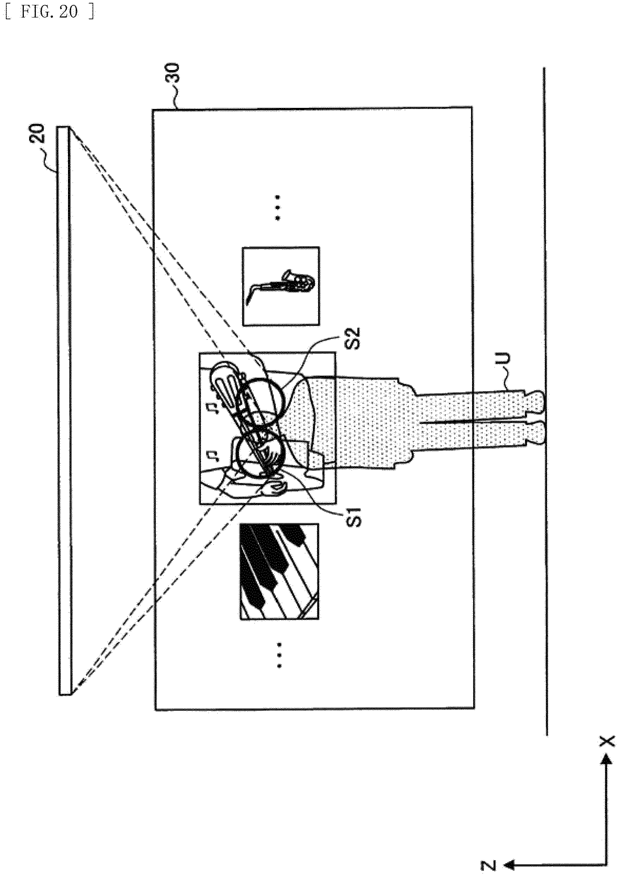

A case of determining the position of the user's head as the localization position of the virtual sound source has been described above as an example. However, the sound-source position determining section 131 may determine a right-ear position or a left-ear position of the user as the localization position of the virtual sound source. As illustrated in FIG. 20, the output control section 133 may control the output from the speaker array 20 to cause the virtual sound source to be located at each of the right-ear position and the left-ear position. FIG. 20 is an explanatory diagram that describes a second modification example of the information processing system. In this case, for example, the sound-source position determining section 131 may determine the localization position by calculating, from the touch operation position $P_T(X_T, Z_T)$, a hearing position $P_{HR}(X_{HR}, Z_{HR})$ corresponding to the right-ear position of the user and a hearing position $P_{HL}(X_{HL}, Z_{HL})$ corresponding to the left-ear position of the user, using Expressions (2) and (3) below:

$$(X_{HR}, Z_{HR}) = (X_T - F_X, Z_T + F_Z) \ldots \text{Expression (2)}$$

$$(X_{HL}, Z_{HL}) = (X_T + F_X, Z_T + F_Z) \ldots \text{Expression (3)}$$

where $F_X$ is a correction factor related to the x-axis direction, and $F_Z$ is a correction factor related to the z-axis direction.

Use of the correction factor Fx makes it possible to convert the touch operation position of the user in the x-axis direction into the right-ear position and the left-ear position of the user. Additionally, use of the correction factor Fz makes it possible to convert the touch operation position of the user in the z-axis direction into the right-ear position and the left-ear position of the user. As an example, the correction factor Fx at this time may be 0.1 m, or the correction factor Fz may be set within a range of 0.1 m to 0.3 m.

This makes it possible for each of the virtual sound source located at the right-ear position and the virtual sound source located at the left-ear position to reproduce different voice information, thus making it possible to perform stereo reproduction of the voice.

In a case where the output control section 133 controls the output from the speaker array 20 to cause the virtual sound sources to be respectively located at the right-ear position and the left-ear position of the user, the output control section 133 may perform filter processing using a head-related transfer function. As a result of the voice on which the filter processing has been performed using the head-related transfer function being outputted from the virtual sound source located at the right-ear position and being outputted from the virtual sound source located at the left-ear position, it becomes possible to provide a higher sense of realism to the user.

[4-3. Third Modification Example]

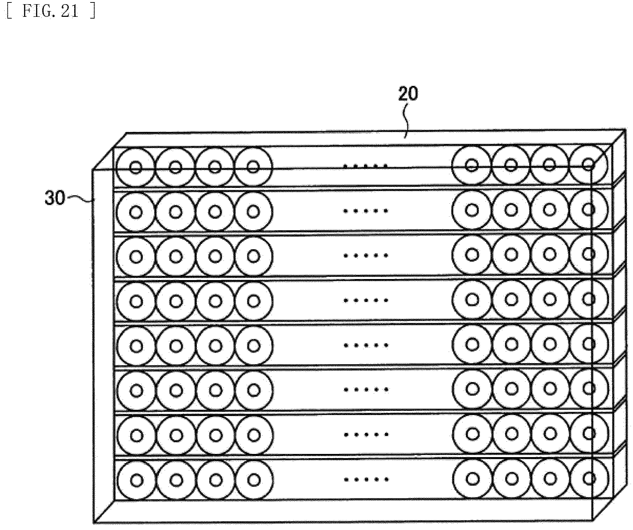

The information processing system 1 and the information processing system 2 have been described above with reference to cases where the speaker array 20 is installed above the display 30 as an example. However, as described earlier, it is sufficient to install the speaker array 20 so that the virtual sound source is located within a range in which the user is able to recognize visual information and perform a touch operation. For example, as illustrated in FIG. 21, the speaker array 20 may include a stack of a plurality of line array speakers installed on a back surface of the display 30. In a case where the speaker array 20 is a single line array speaker, as described earlier with reference to FIG. 7, a plurality of virtual sound sources is generated each at a position equidistant from the speaker array 20 in a cross-section perpendicular to the longitudinal direction of the line array speaker. However, in the speaker array 20 in which the plurality of line array speakers is stacked, it is also possible to control the localization position of each virtual sound source in the direction perpendicular to the longitudinal direction of the line array speakers. As a result, this makes it possible for the speaker array 20 to generate each virtual sound source as a spot-like sound source. Thus, for example, as a result of installing, behind the display 30, the speaker array 20 that includes a stack of line array speakers and localizing the spot-like virtual sound sources on a view surface of the display 30, it becomes possible to output voice information from the position of the image shown on the display 30. As a result, the user is able to feel as if the image shown on the display 30 is producing a sound.

It is to be noted that each of the first to third modification examples described above may be combined with the first or second embodiment.

<5. Hardware Configuration>

Some embodiments according to the present disclosure have been described above. The foregoing information processing is achieved by cooperation between software and hardware of an information processing system or information processing apparatus that is described in the following.

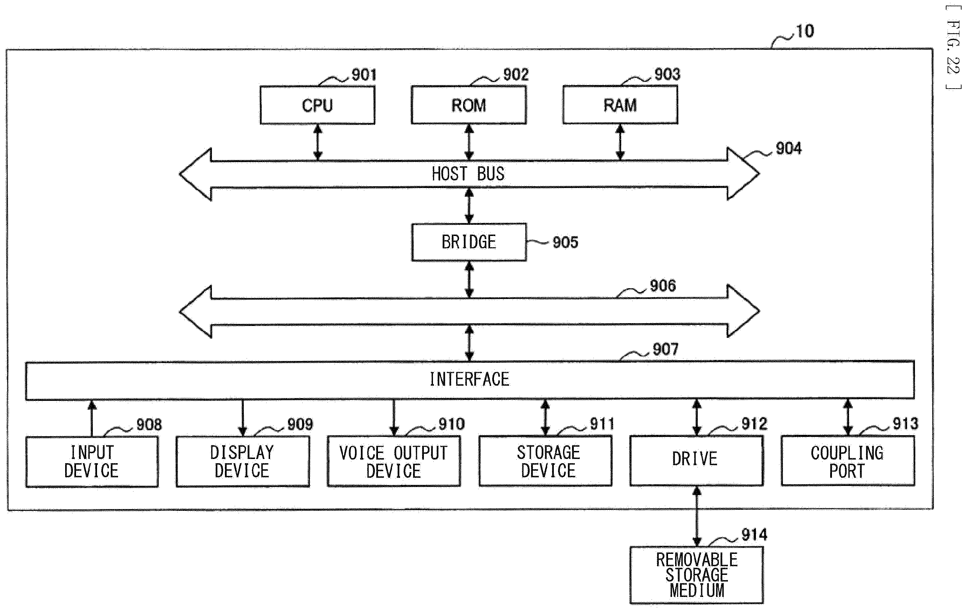

FIG. 22 is a block diagram illustrating an example hardware configuration of an information processing apparatus according to an embodiment of the present disclosure. With reference to FIG. 21, the information processing apparatus includes, for example, a CPU 901, a ROM 902, a RAM 903, a host bus 904, a bridge 905, an external bus 906, an interface 907, an input device 908, a display device 909, a voice output device 910, a storage device 911, a drive 912, a coupling port 913, and a removable storage medium 914. It is to be noted that the hardware configuration illustrated here is an example, and a part of components may be omitted. In addition, a component other than the components illustrated here may further be included.

For example, the CPU 901 functions as an arithmetic processor or a controller, and controls all or a part of the operation of each component on the basis of various programs held by the ROM 902, the RAM 903, the storage device 911, or the removable storage medium 914. The CPU 901 may include in the operation information obtaining section 110, the voice information obtaining section 120, the control section 130, and the head position detecting section 160.

The ROM 902 is a means to hold a program to be read into the CPU 901, data used for calculation, or the like. The RAM 903, for example, holds temporarily or permanently a program to be read into the CPU 901, various parameters, or the like that appropriately vary when executing the program.

For example, the CPU 901, the ROM 902, and the RAM 903 are coupled to each other via the host bus 904 that enables high-speed data transmission. On the other hand, for example, the host bus 904 is coupled to the external bus 906 having a comparatively low data-transmission speed via the bridge 905. In addition, the external bus 906 is coupled to various components via the interface 907.

For the input device 908, for example, a touch panel, a mouse, a keyboard, or the like may be used. Furthermore, as the input device 908, there is a case of using a remote controller that is able to transmit a control signal using an infrared ray or another radio wave. In the information processing system according to an embodiment of the present disclosure, the input device 908 corresponds to the touch sensor (touch panel) included in the display 30.

For example, the display device 909 is the display 30 to which a CRT (cathode ray tube), an LCD, an organic EL, or the like is applied, and the voice output device 910 is the speaker array 20. The display device 909 and the voice output device 910 are each a device that is able to visually or aurally notify a user of the obtained information.

The storage device 911 is a device to hold various data. As the storage device 911, for example, a magnetic storage device such as a hard disk drive (HDD), a semiconductor storage device, an optical storage device, a magneto-optical storage device, or the like is used. The storage device 911 corresponds to the storage section 140.

For example, the drive 912 is a device that reads information held by the removable storage medium 914 such as a magnetic disk, an optical disc, a magneto-optical disk, or a semiconductor memory, or writes information to the removable storage medium 914.

For example, the removable storage medium 914 is a DVD medium, a Blu-ray (registered trademark) medium, an HD DVD medium, various types of semiconductor storage media, or the like. Needless to say, the removable storage medium 914 may be, for example, an IC card on which a noncontact-type IC chip is mounted, an electronic device, or the like.

For example, the coupling port 913 is a port with which an external coupling device 902, such as a USB (Universal Serial Bus) port, an IEEE1394 port, an SCSI (Small Computer System Interface), an RS-232C port, or an optical audio terminal is coupled.

<6. Conclusion>

As described above, according to the present disclosure, it is possible to provide a user with voice information corresponding to information shown on a display while suppressing sound leakage to a surrounding space. In addition, it is possible to suppress recognition of the outputted voice information by a person other than the intended user, and avoid interference with an information-obtaining action by a person other than the user.

In addition, for the information processing system according to the present disclosure, it is not necessary to wear a mounting device such as a headset. This saves the trouble of wearing the mounting device and makes it possible to prevent occurrence of discomfort due to the wearing.

In addition, no deterioration due to friction, etc. occurs in the mounding device, and this makes it possible to reduce a maintenance cost. In addition, it is not necessary to use a specific directional speaker or an ultrasonic wave speaker, and this makes it possible to reduce a manufacturing cost.

In addition, in the information processing system according to the present disclosure, voice information is presented as a result of the input operation by the user. This keeps the voice information from being outputted just by detecting the presence of a non-user near the information processing system, thus suppressing malfunction.

In addition, in the information processing system according to the present disclosure, the voice produced by the virtual sound source is a spherical wave which causes a significant attenuation of a voice. This makes it possible to present voice information at a volume level sufficient to be recognized only by the user. This suppresses recognition of the voice information by a non-user, and prevents the non-user from feeling discomfort.

In addition, the information processing system according to the present disclosure makes it is possible to install speaker arrays close to each other or install speaker arrays to be opposed to each other, thus making it possible to achieve efficient use of an installation space. In addition, this makes it possible to increase the number of users able to use the information processing system according to the present disclosure per unit area of the installation site.

This enables a stereo information presentation, which has been difficult for a general directional speaker or a directive wavefront synthesis technique, and makes it possible to provide a voice that gives a higher sense of realism and a higher sense of localization to a user.

Although some preferred embodiments of the present disclosure have been described in detail above with reference to the attached drawings, the technical scope of the present disclosure is not limited to such examples. It is clear that those having ordinary knowledge in the art in the technical field of the present disclosure will easily arrive at various alterations or modifications within a scope of the technical idea described in the claims, and it is understood that these alternations or modifications naturally belong to the technical scope of the present disclosure.

In addition, the effects described herein are merely descriptive or illustrative and are not limitative. In other words, in addition to or in place of the effects described above, the technology according to the present disclosure can have other effects clear to those skilled in the art from the description herein.

In addition, regarding the processing described herein using a flowchart, it is not altogether necessary to execute the processing in the order illustrated by the drawings. Some processing steps may be executed in parallel. In addition, an additional processing step may be adopted, or a part of the processing may be omitted.

It is to be noted that the following configurations also belong to the technical scope of the present disclosure.

(1) An information processing apparatus including:

a sound-source position determining section that determines a position of a virtual sound source, the virtual sound source being generated by a speaker array and producing a spherical wave; and
an output control section that controls an output from the speaker array to cause the virtual sound source to be located at the position, the virtual sound source outputting voice information corresponding to visual information that is information shown on a display.

(2) The information processing apparatus according to (1) described above, in which the output control section controls the output from the speaker array through wavefront-synthesis filter processing to cause the virtual sound source to be located at the position.
(3) The information processing apparatus according to (1) or (2) described above, in which

the sound-source position determining section calculates a hearing position of a user to determine the position of the virtual sound source on a basis of the hearing position, and

the output control section controls the output from the speaker array to cause the virtual sound source to be located at the position.

(4) The information processing apparatus according to (3) described above, in which the sound-source position determining section calculates the hearing position on a basis of a touch operation position detected by a touch sensor, the touch sensor being included in the display and detecting a touch operation by the user.
(5) The information processing apparatus according to any one of (1) to (4) described above, further including a head position detecting section that detects a position of a head of a user, in which the sound-source position determining section determines the position of the virtual sound source on a basis of the position of the head of the user, the position of the head being detected by the head position detecting section when a predetermined input operation performed by the user is detected.
(6) The information processing apparatus according to (5) described above, in which the sound-source position determining section determines the position of the virtual sound source on a basis of the position of the head of the user, the head position being detected by the head position detecting section when a touch operation performed by the user is detected by a touch sensor, the touch sensor being included in the display and detecting the touch operation performed by the user.
(7) The information processing apparatus according to any one of (1) to (6) described above, in which the output control section outputs a plurality of virtual sound sources.
(8) The information processing apparatus according to an one of (1) to (7) described above, in which the output control section controls the output from the speaker array to cause a plurality of the virtual sound sources to be generated, the plurality of virtual sound sources each outputting different voice information in accordance with a corresponding one of a plurality of pieces of the visual information.
(9) The information processing apparatus according to (8) described above, in which the output control section controls the output from the speaker array to cause the virtual sound source to be located at a right-ear position, a left-year position, or both of the user.
(10) The information processing apparatus according to (9) described above in which the output control section performs filter processing using a head-related transfer function.
(11) An information processing system including:

a sound-source position determining section that determines a position of a virtual sound source, the virtual sound source being generated by a speaker array and producing a spherical wave; and
an output control section that controls an output from the speaker array to cause the virtual sound source to be located at the position, the virtual sound source outputting voice information corresponding to visual information that is information shown on a display.

(12) An information processing method including:

determining a position of a virtual sound source, the virtual sound source being generated by a speaker array and producing a spherical wave; and
controlling an output from the speaker array to cause the virtual sound source to be located at the position, the virtual sound source outputting voice information corresponding to visual information that is information shown on a display,
the determining and the controlling being performed by a processor.

(13) A program directed to causing a computer to function as:

a sound-source position determining section that determines a position of a virtual sound source, the virtual sound source being generated by a speaker array and producing a spherical wave, and
an output control section that controls an output from the speaker array to cause the virtual sound source to be located at the position, the virtual sound source outputting voice information corresponding to visual information that is information shown on a display.

Description of Reference Signs

| | |
|---|---|
| 1, 2 | Information processing system |
| 10, 50 | Information processing apparatus |
| 20 | Speaker array |
| 30 | Display |
| 40 | Network |
| 60 | Camera |
| 110 | Operation information obtaining section |
| 120 | Voice information obtaining section |
| 130 | Control section |
| 131 | Sound-source position determining section |
| 133 | Output control section |
| 135 | Display control section |
| 140 | Storage section |
| 150 | Communication section |
| 160 | Head position detecting section |

**Claims**

1. An information processing apparatus comprising:

a sound-source position determining section that determines a position of a virtual sound source, the virtual sound source being generated by a speaker array and producing a spherical wave; and
an output control section that controls an output from the speaker array to cause the virtual sound source to be located at the position, the virtual sound source outputting voice information corresponding to visual information that is information shown on a display.

2. The information processing apparatus according to claim 1, wherein
the output control section controls the output from the speaker array through wavefront-synthesis filter processing to cause the virtual sound source to be located at the position.

3. The information processing apparatus according to claim 1, wherein
the sound-source position determining section calculates a hearing position of a user to determine the position of the virtual sound source on a basis of the hearing position, and
the output control section controls the output from the speaker array to cause the virtual sound source to be located at the position.

4. The information processing apparatus according to claim 3, wherein
the sound-source position determining section calculates the hearing position on a basis of a touch operation position detected by a touch sensor, the touch sensor being included in the display and detecting a touch operation by the user.

5. The information processing apparatus according to claim 1, further comprising a head position detecting section that detects a position of a head of a user, wherein
the sound-source position determining section determines the position of the virtual sound source on a basis of the position of the head of the user, the position of the head being detected by the head position detecting section when a predetermined input operation performed by the user is detected.

**6.** The information processing apparatus according to claim 5, wherein
the sound-source position determining section determines the position of the virtual sound source on a basis of the position of the head of the user, the head position being detected by the head position detecting section when a touch operation performed by the user is detected by a touch sensor, the touch sensor being included in the display and detecting the touch operation performed by the user.

**7.** The information processing apparatus according to claim 1, wherein
the output control section outputs a plurality of virtual sound sources.

**8.** The information processing apparatus according to claim 1, wherein
the output control section controls the output from the speaker array to cause a plurality of the virtual sound sources to be generated, the plurality of virtual sound sources each outputting different voice information in accordance with a corresponding one of a plurality of pieces of the visual information.

**9.** The information processing apparatus according to claim 8, wherein
the output control section controls the output from the speaker array to cause the virtual sound source to be located at a right-ear position, a left-year position, or both of the user.

**10.** The information processing apparatus according to claim 9, wherein
the output control section performs filter processing using a head-related transfer function.

**11.** An information processing system comprising:

a sound-source position determining section that determines a position of a virtual sound source, the virtual sound source being generated by a speaker array and producing a spherical wave; and
an output control section that controls an output from the speaker array to cause the virtual sound source to be located at the position, the virtual sound source outputting voice information corresponding to visual information that is information shown on a display.

**12.** An information processing method comprising:

determining a position of a virtual sound source, the virtual sound source being generated by a speaker array and producing a spherical wave; and
controlling an output from the speaker array to cause the virtual sound source to be located at the position, the virtual sound source outputting voice information corresponding to visual information that is information shown on a display,
the determining and the controlling being performed by a processor.

**13.** A program directed to causing a computer to function as:

a sound-source position determining section that determines a position of a virtual sound source, the virtual sound source being generated by a speaker array and producing a spherical wave, and
an output control section that controls an output from the speaker array to cause the virtual sound source to be located at the position, the virtual sound source outputting voice information corresponding to visual information that is information shown on a display.

[ FIG. 1 ]

[ FIG. 2 ]

[ FIG. 3 ]

[ FIG. 4 ]

[ FIG. 5 ]

[ FIG.6 ]

[ FIG. 7 ]

[ FIG. 8 ]

EP 3 833 044 A1

[ FIG. 9 ]

24

[ FIG. 10 ]

[ FIG. 11 ]

[ FIG. 12 ]

[ FIG. 13 ]

```
                    ┌─────────────┐
                    │    START    │
                    └──────┬──────┘
                           │
                           ▼
            ┌───────────────────────────┐
            │  SHOW JACKET OF MUSICAL    │──S101
            │  PIECE ON DISPLAY 30       │
            └──────────────┬────────────┘
                           │
                           ▼
            ┌───────────────────────────┐
            │  DETECT TOUCH OPERATION    │──S103
            └──────────────┬────────────┘
                           │
                           ▼
            ┌───────────────────────────┐
            │  OBTAIN TOUCH-OPERATION    │──S105
            │  POSITION COORDINATE,      │
            │  AND METADATA              │
            └──────────────┬────────────┘
                           │
                           ▼
            ┌───────────────────────────┐
            │  DETERMINE SOUND           │──S107
            │  SOURCE POSITION           │
            └──────────────┬────────────┘
                           │
                           ▼
            ┌───────────────────────────┐
            │  CALCULATE WAVEFRONT       │──S109
            │  SYNTHESIS FILTER          │
            └──────────────┬────────────┘
                           │
                           ▼
            ┌───────────────────────────┐
            │  INPUT AUDIO DATA          │──S111
            └──────────────┬────────────┘
                           │
                           ▼
            ┌───────────────────────────┐
            │ PERFORM WAVEFRONT-SYNTHESIS│──S113
            │ FILTER PROCESSING, AND     │
            │ OUTPUT WAVEFRONT SYNTHESIS │
            │ SIGNAL                     │
            └──────────────┬────────────┘
                           │
                           ▼
            ┌───────────────────────────┐
            │  OUTPUT VOICE INFORMATION, │──S115
            │  AND SHOW METADATA         │
            └──────────────┬────────────┘
                           │
                           ▼
                    ┌─────────────┐
                    │     END     │
                    └─────────────┘
```

[ FIG. 14 ]

[ FIG. 15 ]

[ FIG. 16 ]

[ FIG. 17 ]

```
                    ┌─────────────┐
                    │    START    │
                    └──────┬──────┘
                           ▼
          ┌─────────────────────────────┐
          │ SHOW JACKET OF MUSICAL      │～S201
          │ PIECE ON DISPLAY 30         │
          └──────────────┬──────────────┘
                         ▼
          ┌─────────────────────────────┐
          │ DETECT TOUCH OPERATION      │～S203
          └──────────────┬──────────────┘
                         ▼
          ┌─────────────────────────────┐
          │ DETECT HEAD POSITION        │～S204
          └──────────────┬──────────────┘
                         ▼
          ┌─────────────────────────────┐
          │ OBTAIN TOUCH-OPERATION      │
          │ POSITION COORDINATE,        │～S205
          │ AND METADATA                │
          └──────────────┬──────────────┘
                         ▼
          ┌─────────────────────────────┐
          │ DETERMINE SOUND             │～S207
          │ SOURCE POSITION             │
          └──────────────┬──────────────┘
                         ▼
          ┌─────────────────────────────┐
          │ CALCULATE WAVEFRONT         │～S209
          │ SYNTHESIS FILTER            │
          └──────────────┬──────────────┘
                         ▼
          ┌─────────────────────────────┐
          │ INPUT AUDIO DATA            │～S211
          └──────────────┬──────────────┘
                         ▼
          ┌─────────────────────────────┐
          │ PERFORM WAVEFRONT-SYNTHESIS │
          │ FILTER PROCESSING, AND      │～S213
          │ OUTPUT WAVEFRONT SYNTHESIS  │
          │ SIGNAL                      │
          └──────────────┬──────────────┘
                         ▼
          ┌─────────────────────────────┐
          │ OUTPUT VOICE INFORMATION,   │～S215
          │ AND SHOW METADATA           │
          └──────────────┬──────────────┘
                         ▼
                    ┌─────────────┐
                    │     END     │
                    └─────────────┘
```

[ FIG. 18 ]

[ FIG. 19 ]

[ FIG. 20 ]

EP 3 833 044 A1

[ FIG. 21 ]

[ FIG. 22 ]

## INTERNATIONAL SEARCH REPORT

| International application No. |
| --- |
| PCT/JP2019/028576 |

A. CLASSIFICATION OF SUBJECT MATTER
Int.Cl. H04R3/00(2006.01)i, G08G1/005(2006.01)i, H04R1/02(2006.01)i, H04R1/40(2006.01)i

According to International Patent Classification (IPC) or to both national classification and IPC

B. FIELDS SEARCHED

Minimum documentation searched (classification system followed by classification symbols)
Int.Cl. H04R3/00, G08G1/005, H04R1/02, H04R1/40

Documentation searched other than minimum documentation to the extent that such documents are included in the fields searched
Published examined utility model applications of Japan        1922–1996
Published unexamined utility model applications of Japan      1971–2019
Registered utility model specifications of Japan              1996–2019
Published registered utility model applications of Japan      1994–2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | WO 2018/008395 A1 (SONY CORPORATION) 11 January 2018, paragraphs [0001], [0025]-[0234], fig. 1-10 & EP 3484184 A1, paragraphs [0001], [0025]-[0234], fig. 1-10 | 1-4, 7-13 |
| Y | JP 2015-233284 A (SONY CORPORATION) 24 December 2015, paragraph [0111] (Family: none) | 1-4, 7-13 |
| Y | JP 2017-011596 A (YAMAHA CORPORATION) 12 January 2017, paragraph [0075] (Family: none) | 1-4, 7-13 |

☒ Further documents are listed in the continuation of Box C.     ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 07.08.2019 | 20.08.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

## INTERNATIONAL SEARCH REPORT

<table>
<tr><td colspan="3">International application No.<br>PCT/JP2019/028576</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2014-072707 A (FOSTER ELECTRIC CO., LTD.) 21 April 2014, paragraphs [0058]-[0067], fig. 5<br>(Family: none) | 3, 4, 9, 10 |
| Y | WO 2013/105413 A1 (SONY CORPORATION) 18 July 2013, paragraph [0063]<br>& US 2014/0321680 A1, paragraph [0105] | 9, 10 |
| A | JP 2007-228336 A (ALPINE ELECTRONICS INC.) 06 September 2007, paragraphs [0014]-[0044], fig. 1-5<br>(Family: none) | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017161448 A

**Non-patent literature cited in the description**

- **S. SPORS et al.** Physical and Perceptual Properties of Focused Sources in Wave Field Synthesis. *Audio Engineering Society Convention Paper,* 09 October 2009